# EUROPÄISCHE PATENTANMELDUNG

(11) **EP 2 743 551 A1**
(43) Veröffentlichungstag der Anmeldung: **18.06.2014**
(21) Anmeldenummer: 12197179.0
(22) Anmeldetag: 14.12.2012
(51) Int. Cl.: F16K 5/06, F16K 27/06

(54) **Absperrorgan mit Spülung**

(71) Anmelder: Aurotec GmbH, 4840 Vöcklabruck (AT)
(72) Erfinder: Zikeli, Stefan, 4844 Regau (AT); Longin, Michael, 4863 Seewalchen am Attersee (AT); Ecker, Friedrich, 4850 Timelkam (AT); Weidinger, Klaus, 4860 Lenzing (AT)
(74) Vertreter: Sonn & Partner Patentanwälte

(57) **Zusammenfassung**

Die Erfindung betrifft ein Absperrorgan, das ein Ventilgehäuse (1) mit einem Innenraum sowie mindestens einem Einlass (4) und mindestens einem Auslass (5) und ein Verschlusselement (2) aufweist, welches um eine Achse drehbar im Innenraum gelagert ist, wobei zwischen dem Verschlusselement (2) und dem Ventilgehäuse (1) ein Freiraum (9) zum Durchfluss eines Fluids zwischen Ein- und Auslass vorliegt, und an dem mindestens einen Einlass zwischen Ventilgehäuse und Verschlusselement ein Dichtflächenpaar (6,7) vorgesehen ist, und wobei die Dichtfläche (7) des Verschlusselements (2) durch Rotation des Verschlusselements schwenkbar ist und in Sperrposition des Absperrorgans den Einlass durch fluiddichtes Anliegen an der Dichtfläche (6) des Ventilgehäuses (1) versperrt, wobei um das Verschlusselement ein Spalt oder Freiraum vorgesehen ist.

## Beschreibung

Die vorliegende Erfindung betrifft ein Absperrorgan für Rohrleitungen für den Transport chemisch instabiler Fluide.

Bekannt ist ein Kugelhahn, in dem zur Entgegenwirkung eines Druckanstiegs in einem Totraum in einem Abdichtelement ein Sackloch vorgesehen ist, sodass bei einem unzulässig hohen Druck die Dichtfläche elastisch nachgibt (DE 44 33 985 A1). Diese Anordnung hat jedoch den Nachteil, dass in dem Totraum keine Druckanstiege vermieden werden können. Zudem ist diese Anordnung auf ein elastisches Abdichtelement angewiesen, dass in manchen Anwendungen, z.B. bei hohen Temperaturen oder bei lösungsmittelhaltigen Fluiden, nicht eingesetzt werden kann.

In der Patentschrift US 6,267,353 wird ein Absperrorgan beschrieben, indem großräumige Toträume vorgesehen sind, in der Absicht, dass diese leichter durch vorbeifließendes Fluid gespült werden. Je nach Fluid, insbesondere bei viskosen Fluiden, erfolgt dies nicht wunschgemäß und es kommt zu permanenten Ablagerungen.

In der US 2008/0105845 A1 und in der US 2011/0309280 A1 werden Kugelhähne beschrieben, deren kugelförmige Hahnküken in teiloffener Stellung umspült werden. In der voll geöffneten (US 2008/0105845 A1) und in der gesperrten Stellung (beide Patente) entstehen jedoch abgeschlossene Toträume, in denen sich chemisch instabile Fluide zersetzen und aufgrund eines unabbaubaren Drucks zu explosionsartigen Reaktionen führen könnten. Diese Kugelhähne wurden daher hauptsächlich für die Verwendung von chemisch stabilen Fluiden vorgeschlagen, z.B. zur Verwendung in der Nahrungsmittelindustrie. Die Spülmöglichkeit der Kugelhähne ausgeführt nach US 2008/0105845 A1 beschränkt sich auf Betriebszustände in teiloffener Stellung, derartige Ausführungen sind daher vorzugsweise nur für Volumenstromregelzwecke geeignet. Als Absperrorgane sind derartig ausgeformte Armaturen gänzlich ungeeignet, da die sich bildenden abgeschlossenen Toträume erhebliche Sicherheitsrisiken darstellen.

In den Patentschriften US 3,464,494 und EP 0 781 356 B1 werden Entlastungsbohrungen in Ventilen beschrieben. Derartige Entlastungsbohrungen zu einem Außenbereich des Ventils haben jedoch den Nachteil eines Fluidverlustes und erfordern eine aufwändige Druckkontrolle der Entlastungsbohrung, insbesondere wenn eine bestimmte Vorrichtung wechselweise zum Einsatz bei unterschiedlichen Drücken verwendet werden soll.

Es ist ein Ziel der vorliegenden Erfindung verbesserte, an die Betriebsbedingungen angepasste Absperrorgane zur Verfügung zu stellen, welche insbesondere auch zum Transport chemisch instabiler Fluide geeignet ist, ohne dass in Toträumen des Organs gefährliche Abbauprodukte entstehen. Bedeutende Betriebsbedingungen können - wie erfindungsgemäß weiter unten ausgeführt - durch die Spaltgeschwindigkeit, den Freiraum - Austauschfläche, durch das Spülstromverhältnis sowie der Spülzahl ausgedrückt werden. Für den Fachmann ist jedoch klar dass die oben angeführten erfindungsgemäßen Betriebsbedingungen auch über weitere betriebsmaßnahmen oder Anlagenauslegungen begleitet werden müssen. So sind thermisch instabile Fluide bestehend aus der Zusammensetzung Cellulose / Aminoxid / Wasser bekannt die unter bestimmten Verfahrensvoraussetzungen exotherm reagieren können. Faktoren die im Falle der Förderung einer Cellulose / Aminoxid / Wasser Lösung eine Exothermie hervorrufen und katalysieren können sind beispielsweise erhöhte Produktionstemperaturen (> 100°C), ein reduzierter Wassergehalt, ein erhöhter Anteil (Grundpegel) an Übergangsmetallionen (>10 ppm Eisen), ein erhöhter Anteil an Peroxiden, und die Verwendung von nicht geeigneten Werkstoffen (wie Z.B. Buntmetalle, unpassivierter Edelstahl, Kohlenstoffstahl) für das Polymertransportsystem, welches aus Rohrleitungen, Wärmetauschern und Transportpumpen bestehen kann, gegeben.

Neben den zuvor genannten anlagen- und prozesstechnischen Betriebsbedingungen stellt die Erfindung ein Absperrorgan und ein mit diesem Absperrorgan durchgeführtes Verfahren dar, welcher zur Totraumvermeidung in der Offenposition eine an die Betriebsbedingungen angepasste Umspülung des innen gelagerten Verschlusselements oder Schließteils ermöglicht, insbesondere zur Verwendung in einer Rohrleitung zum Transport eines chemisch oder thermisch instabilen Fluids. Die Erfindung ist überdies in den Ansprüchen definiert.

Die Erfindung betrifft insbesondere ein Absperrorgan oder einen Absperrhahn, das ein Ventilgehäuse mit einem Innenraum sowie mindestens einem Einlass und mindestens einem Auslass und ein Verschlusselement aufweist, welcher um eine Achse drehbar im Innenraum gelagert ist, wobei zwischen dem Verschlusselement und dem Ventilgehäuse ein Freiraum zum Durchfluss eines Fluids zwischen Ein- und Auslass vorliegt, und an dem mindestens einen Einlass zwischen Ventilgehäuse und Verschlusselement ein Dichtflächenpaar vorgesehen ist, und wobei die Dichtfläche (Dichtung) des Verschlusselements durch Rotation des Verschlusselements schwenkbar ist und in Sperrposition des Absperrorgans den Einlass durch fluiddichtes Anliegen an der Dichtfläche des Ventilgehäuses versperrt, dadurch gekennzeichnet, dass der Abstand der Dichtflächen zur Achse bzw. Kugelmittelpunkt größer ist als der Abstand der Achse bzw. Kugelmittelpunkt zu anderen äußeren Bereichen des Verschlusselements, um den Freiraum zu bilden, der in der Sperrposition mit dem Auslass fluiddurchlässig verbunden ist
und/oder
der Abstand der Dichtflächen zur Achse bzw. Kugelmittelpunkt kleiner ist als der Abstand der Achse bzw. Kugelmittelpunkt zu anderen Bereichen des Ventilgehäuseinnenraums, um den Freiraum zu bilden, der in der Sperrposition mit dem Auslass fluiddurchlässig verbunden ist. Das Absperrorgan kann in beidseitiger Orientierung verwendet werden, entweder vom Ein- zum Auslass oder vom Aus- zum Einlass. Die Bezeichnungen Ein- und Auslass werden hierin verwendet um Öffnungen zu unterscheiden.

Das erfindungsgemäße Absperrorgan ermöglicht einen sicheren Verschluss einer Leitung zur Unterbrechung eines Fluidflusses zwischen dem Einlass und dem Auslass. Hierbei ist die Erfindung nicht limitiert auf Absperrorgane mit einem Einlass und einem Auslass, sondern kann neben dieser Ausführungsform auch mehrere Einlässe und/oder Auslässe aufweisen. In dieser Form kann das erfindungsgemäße Absperrorgan als Verteilerstück oder Zusammenführungsstück oder auch als Wechselschalter zwischen verschiedenen Einlässen oder Auslässen dienen. In bestimmten Ausführungsformen hat das erfindungsgemäße Absperrorgan einen, zwei, drei oder mehr Einlässe.

Für den Verschluss ist im Innenraum des Absperrorgans ein Verschlusselement vorgesehen, welches um eine Achse rotierbar vorgesehen ist und bei Rotation in eine Sperrposition den Einlass, mehrere oder alle Einlässe versperrt. In der Regel bleibt der Auslass unversperrt - sowohl in der Sperr- als auch in der Offenposition, sodass hier Fluid aus dem Absperrorgan jederzeit austreten kann. Dieses Austreten wird insbesondere über den Freiraum ermöglicht, der eine Durchflussverbindung mit dem Auslass aufweist. Vorzugsweise ist der Freiraum mit dem Auslass in jeder Rotationsposition des Sperrelements mit dem Auslass verbunden, sodass Fluid aus dem Freiraum jederzeit austreten kann.

Der Freiraum ermöglicht eine Umspülung des Verschlusselements. Er kann durch Vertiefungen oder Einfräsungen im Gehäuse oder im Verschlusselement gebildet werden. Das Verschlusselement - auch Schließteil oder Hahnküken bezeichnet - kann eine oder mehrere Bohrungen oder Schlitze zum Durchlass von Fluid zwischen Ein- und Auslass aufweisen oder es kann frei von Bohrungen sein. In der Öffnungsstellung bzw. Teilöffnungsstellung des Absperrorgans kann der Einlass und der Auslass über Freiraum und Durchlassbohrungen oder aber nur über den Freiraum fluiddurchlässig verbunden sein.

Abgesehen von diesen alternativen Ausführungsformen mit bzw. ohne Durchlassbohrung sind alle weiteren hierin beschriebenen bevorzugten Merkmale und Ausführungsformen miteinander in beliebiger Form kombinierbar.

Ein Problem bisheriger Verschlusselemente ist die Bildung von Toträumen, welche nicht ausreichend gespült sind, oder welche in bestimmten Rotationspositionen abgeschlossene Räume bilden. Erfindungsgemäß werden diese Nachteile vermieden, sodass immer ein Abfluss des Fluids aus Toträumen möglich ist, bzw. die Toträume vollständig vermieden werden, da über den Freiraum als ansonsten potentieller Totraum ein wesentlicher Fluidstrom geleitet wird.

Die Leitung von Fluid über den Freiraum erfolgt in teilweiser und vollständiger Öffnungsposition kann aber auch ausschließlich in einer teilweisen Öffnungsposition erfolgen (insbesondere bei Ausführungsformen mit Verschlusselementen, bei denen der Abstand der Dichtflächen zur Achse bzw. Kugelmittelpunkt größer ist als der Abstand der Achse bzw. Kugelmittelpunkt zu anderen äußeren Bereichen des Verschlusselements).

Sowohl das Gehäuse, insbesondere um den Einlass, als auch das Verschlusselement weisen eine Dichtfläche auf, welche gemeinsam als Dichtflächenpaar bezeichnet werden. Durch Anliegen beider Dichtflächen wird der Einlass durch das Verschlusselement fluidundurchlässig versperrt. Je nach Form des Ventilgehäuses können die Dichtflächen unterschiedliche Geometrien aufweisen. Die Dichtflächen um den Einlass können in Ansicht vieleckig, rechteckig, rund, insbesondere kreisrund oder oval, sein. Das Verschlusselement kann teilzylinderförmig oder teilkugelförmig sein.

Erfindungsgemäß werden Abstände zur Achse bzw. dem Kugelmittelpunkt angegeben, um bestimmte Freiräume, welche als ggf. alternativer Durchflussbereich dienen, zu beschreiben. Der Bezug "Achse" oder "Kugelmittelpunkt" betrifft, je nach Form des Verschlusselements, somit den Mittelpunkt, der vom rotationssymmetrischen Verschlusselement zentral positioniert ist. Im Fall von zylindrischen Verschlusselementen ist dies eine Achse. Im Fall von kugelsymmetrischen Verschlusselementen ist dies der Kugelmittelpunkt. Selbstverständlich sind hiermit auch diverse andere rotationssymmetrische Formen mit eingeschlossen, wie z.B. ovale Formen. Die Begriffe "Achse" bzw. "Kugelmittelpunkt sollen somit nicht einschränkend auf eine bestimmte Form verstanden werden. Sofern nicht explizit ausgeschlossen, sollen bei Verwendung des Begriffs "Achse" oder "Kugelmittelpunkt" immer auch andere Formen mit einbezogen sein. In Schnittansichten wird dieser Mittelpunkt meist der Einfachheit halber als "Achse" bezeichnet. Abstände zur Achse beziehen sich hierbei immer auf einen Flächenschnitt normal zur Ache in einer bestimmten Achsposition (z.B. Abstand zum Kugelmittelpunkt auf der Achse). Gemäß diesen Schnitten sind die Begriffe eines Abstands zur Achse (2D im Schnitt) und zum Kugelmittelpunkt (3D) gleichwertig, gleichgültig welchem Formkörper das Verschlusselement entspricht.

In teilkugelförmiger Ausgestaltung wird das erfindungsgemäße Absperrorgan auch als Kugelhahn bezeichnet. Das Verschlusselement kann zusätzlich oder alternativ einen kugelsegmentförmigen Absperrteil mit der Dichtfläche aufweisen. Ein derartiger Absperrteil kann ein Vorsprung sein, welcher zur fluiddichten Absperrung in Sperr-Position vor den Einlass durch Rotation des Absperrelements positioniert wird. An anderen Stellen des Absperrelements im Vergleich zu diesem Vorsprung kann eine Vertiefung vorgesehen sein, wodurch der Freiraum gebildet wird. Somit ist der Abstand der Dichtflächen zur Achse bzw. Kugelmittelpunkt größer als der Abstand der Achse bzw. Kugelmittelpunkt zu anderen äußeren Bereichen des Verschlusselements, um den Freiraum zu bilden, der in der Sperrposition mit dem Auslass fluiddurchlässig verbunden ist. Diese Konfiguration wird insbesondere in Ausführungsformen mit einem Verschlusselement ohne der oben genannten Durchflussbohrung bevorzugt.

Erfindungsgemäße Bereiche mit Abstand zur Achse, die geringer sind als der Abstand der Dichtflächen zur Achse, um den Freiraum zu bilden, der in der Sperrposition mit dem Auslass fluiddurchlässig verbunden ist, können auch bei Vorhandensein einer Durchlassbohrung durch das Verschlusselement gebildet werden. In diesen Konfigurationen wird vorzugsweise eine Vertiefung im Gehäuse zum Innenraum hin vorgesehen, wodurch Fluid um das Verschlusselement herum umgeleitet werden kann. In einer teiloffenen Position wird dadurch Fluidfluss vom Einlass durch die Durchlassbohrung weiters über die Vertiefung hin zum Auslass ermöglicht. Ein weiterer Weg des Fluids durch das erfindungsgemäße Absperrorgan wird durch den Bereich geringeren Abstands zur Achse bzw. Kugelmittelpunkt (z.B. den durch die Durchlassbohrung entfernten Teil des kalottenförmigen Verschlusselements) über die Vertiefung im Gehäuse hin zum Auslass. In besonders bevorzugten Ausführungsformen enthält der Absperrteil des Absperrelements, welcher Teil durch die Dichtfläche begrenzt ist, ebenfalls eine Vertiefung. Dadurch wird ein Durchfluss vom Einlass über die Vertiefung im Absperrteil, weiters über die Vertiefung im Gehäuseteil, zum Auslass ermöglicht. Gemäß dieser Ausführungsform werden sämtliche Freiräume um das Absperrelement durch den Fluidfluss gespült.

Das erfindungsgemäße Dichtflächenpaar ergibt durch Anlagerung der einzelnen Dichtflächen eine Dichtung zum Versperren des Fluidflusses durch den Einlass in den Innenraum. Vorzugsweise ist diese Dichtung durch die Anlagerung der Gehäuse- und Verschlusselement-Körper gegeben.

Erfindungsgemäß kann das Verschlusselement ohne Bereiche mit geringerem Abstand zur Achse bzw. Kugelmittelpunkt als der Abstand zur Dichtfläche ausgeführt sein. Ein Freiraum kann auch durch Vertiefungen im Gehäuse gebildet werden, wobei im Verschlusselement Bereiche mit größerem Abstand zur Achse bzw. Kugelmittelpunkt als der Abstand der Dichtflächen zur Achse bzw. Kugelmittelpunkt vorgesehen werden können. In diesem Fall, aber auch im Fall von Vertiefungen im Verschlusselement, kann das Verschlusselement mit einem oder mehreren Durchlässen (z.B. Bohrungen oder Schlitze) versehen sein, welche eine fluiddurchlässige Verbindung zwischen Einlass und Freiraum bilden. Auch auf diese Art wird ein Totraum in der geöffneten Position durch den Durchfluss von Fluid über die Durchlässe, über den Freiraum zum Auslass vermieden. Das Verschlusselement kann mit einer Durchlassbohrung mit vollem oder reduziertem Querschnitt mit oder ohne Strömungseinbauten versehen sein. Der Freiraum wird hierbei vorzugsweise im Gehäuseinnenraum durch größere Abstände zum Mittelpunkt als dem der Abstand der Dichtflächen zum Mittelpunkt oder zur Achse hergestellt.

Ein erfindungsgemäßes Verschlusselement ohne Bereiche mit geringerem Abstand zur Achse als der Abstand zur Dichtfläche kann auch derart ausgeführt sein, dass keine Durchlassbohrung im Verschlusselement vorhanden ist und somit der gesamte Produktstrom über Bohrungen oder Schlitze vom Einlass über den Freiraum in den Auslass geleitet wird.

Die Dichtwirkung wird vorzugsweisedurch den Einsatz von Dichtelementen wie Kunststoff-, Gummi-, Graphit-, Keramik,- Sinterwerkstoff-, Verbundwerkstoff-, oder Metalldichtungen erzielt, auch eine Ausführung bei der Gehäuseteil und Absperrteil ohne zusätzliches Dichtelement die Dichtwirkung herstellen ist erfindungsgemäß denkbar. Vorzugsweise sind die Dichtflächen des Gehäuses und/oder des Verschlusselements auf einem Abdichtvorsprung vorgesehen. Neben diesem Vorsprung, in anderen Bereichen, kann somit großräumig der Freiraum gebildet werden.

Vorzugsweise ist in Ansicht innerhalb der Dichtfläche des Verschlusselements am äußeren Bereich eine Vertiefung vorgesehen. Diese Vertiefung erlaubt einen Durchfluss von Fluid, wenn dieser Teil (mit der Dichtfläche) des Verschlusselements in Richtung einer Dichtfläche des Gehäuses orientiert ist - wobei das Dichtflächenpaar nicht anliegt. Diese Position ermöglicht eine Spülung des Freiraums in offener oder teiloffener Position des Absperrorgans.

In bevorzugten Ausführungsformen der vorliegenden Erfindung sind die Dichtflächen des Gehäuses und/oder des Verschlusselements, insbesondere auf einem Abdichtvorsprung, in Ansicht kreisförmig oder ringförmig.

In weiteren bevorzugten Ausführungsformen ist der Abdichtvorsprung des Gehäuses und/oder des Verschlusselements ringförmig, z.B. kreisförmig oder oval.

Insbesondere sind gemäß der vorliegenden Erfindung die Dichtflächen am Einlass, wobei der Auslass frei von einem Abdichtelement (wie z.B. den Dichtflächen) ist. Erfindungsgemäß wird damit bezweckt, dass in jeder Rotationsposition des Absperrelements der Freiraum mit dem Auslass verbunden ist, sodass Fluid jederzeit austreten kann.

In bevorzugten Ausführungsformen wird der Freiraum durch eine Vertiefung, insbesondere eine durch die Dichtfläche oder den Abdichtvorsprung begrenzte Vertiefung, gebildet. Die Vertiefung kann am Gehäuse oder am Verschlusselement oder an beiden Teilen vorgesehen werden. Am Ventilgehäuse wird die Vertiefung zum Innenraum hin ausgebildet bzw. am Verschlusselement wird die Vertiefung vorgesehen, sodass zwischen dem Gehäuse und dem Verschlusselement der Freiraum gebildet wird.

In bevorzugten Ausführungsformen ist die Vertiefung des Verschlusselements kalottenförmig, teilsphärisch, zylindrisch oder gekrümmt.

Der Innenraum kann teilkugelförmig oder zylindrisch sein. Die Form des Innenraums ist vorzugsweise an die Form des Verschlusselements angepasst mit einem genau definierten Abstand zueinander im Bereich des Freiraums. Der Abstand kann in besonderen Ausführungsformen der vorliegenden Erfindung im Bereich von 0,5 mm bis 20 mm, vorzugsweise von 0,8 mm bis 18 mm, von 1 mm bis 15 mm, von 1,5 mm bis 10 mm, oder von 2 mm bis 6 mm betragen.

In bevorzugten Ausführungsformen ist das Verschlusselement teilkugelförmig. Der Freiraum dieser Teilkugel umgibt räumlich vorzugsweise das gesamte Verschlusselement - bis auf den Achsbereich, in dem das Verschlusselement befestigt ist - zumindest in einer teiloffenen Position, z.B. bei einer Öffnung um 45°. In teilkugelförmigen Ausführungsformen wird das erfindungsgemäße Absperrorgan auch als Kugelhahn bezeichnet.

Das Verschlusselement kann durch eine Achswelle gelagert und im Innenraum des Ventilgehäuses rotierbar positioniert werden. Vorzugsweise ermöglicht die Rotation des Verschlusselements Drehungen um 90°, 180 oder 360°.

In bevorzugten Ausführungsformen der vorliegenden Erfindung weist das Verschlusselement eine Bohrung zum Durchfluss eines Fluids zwischen Ein- und Auslass in Öffnungsposition des Organs auf, wobei optional weitere Verbindungsbohrungen die Bohrung mit dem Freiraum fluiddurchlässig verbinden. Gemäß einer speziellen Ausführungsform betrifft die vorliegende Erfindung einen Kugelhahn, der ein Gehäuse mit einem teilkugelförmigen Innenraum sowie einen Ein- und Auslass und ein teilkugelförmiges Hahnküken als Verschlusselement aufweist, welches um eine Achse drehbar im Innenraum aufgenommen ist, wobei das Gehäuse zum Innenraum hin und/oder das Hahnküken zum Gehäuse hin eine durch einen Abdichtvorsprung begrenzte Vertiefung aufweist, welche in der Schließstellung des Kugelhahns mit dem Auslass verbunden ist, welche in einer zumindest teilweise offenen Position des Hahnkükens einen Durchfluss eines Fluids zwischen Ein- und Auslass erlaubt. Weitere Verbindungsbohrungen können diesen Durchfluss mit dem Freiraum fluiddurchlässig verbinden, für eine bessere Spülung des Freiraums mit Fluid und zur Vermeidung von Toträumen in der vollständigen Öffnungsposition (z.B. 90° bei einem Absperrorgan mit gegenüberliegenden Ein- und Auslässen).

In vorzugsweisen Ausführungsformen ist die Bohrung zwischen Ein- und Auslass für einen erhöhten Strömungswiderstand ausgestaltet, z.B. kann vor dem Auslass eine Verengung (13) und/oder ein Strömungswiderstandselement, vorzugsweise eine Lochplatte, vorgesehen werden. Hierdurch wird der Druck erhöht und größere Mengen Fluid durch die Freiräume geführt als ohne derartige Widerstände bei einer gleichmäßigen Bohrung mit konstantem Durchmesser zwischen Ein- und Auslass.

Die Erfindung betrifft auch einen Kugelhahn, der ein Gehäuse mit einem teilkugelförmigen Innenraum sowie einen Ein- und Auslass und ein teilkugelförmiges Hahnküken als Verschlusselement aufweist, welches um eine Achse drehbar im Innenraum aufgenommen ist, wobei das Gehäuse zum Innenraum hin und/oder das Hahnküken zum Gehäuse hin eine durch einen Abdichtvorsprung begrenzte Vertiefung aufweist, welche in einer zumindest teilweise offenen Position des Hahnkükens einen Durchfluss eines Fluids zwischen Ein- und Auslass erlaubt, wobei die Vertiefung in der Schließstellung und in der Offenstellung des Kugelhahns mit dem Auslass verbunden ist. Vorzugsweise erlaubt die Vertiefung in einer offenen oder teiloffenen Position des Verschlusselements einen Durchfluss eines Fluids zwischen Ein- und Auslass über die Vertiefung.

Die Bohrung durchquert in vorzugsweisen Ausführungsformen mittig das Verschlusselement, insbesondere bevorzugt wird dabei die Achse mittig durchquert. Eine Achswelle kann durchgängig durch das Verschlusselement vorgesehen werden. In anderen Ausführungsformen weist der Innenraum des Verschlusselements keine Welle auf. Die Welle kann auch außerhalb an das Verschlusselement angebracht werden.

In einer Ausführungsform ist das Verschlusselement ein massiver Körper - ohne Durchgangs- oder Durchlassbohrung normal zur Achse. In dieser Ausführungsform wird im Wesentlichen der gesamte Fluidstrom über den Freiraum, der hier durch die Vertiefung gebildet ist, geführt. Demgemäß betrifft die Erfindung auch ein Absperrorgan, das ein Gehäuse mit einem Innenraum sowie mindestens einen Einlass und mindestens einen Auslass und ein Hahnküken als Versperrelement aufweist, welches um eine Achse drehbar im Innenraum gelagert ist, wobei zwischen dem Hahnküken und dem Gehäuse ein Freiraum zum Durchfluss eines Fluids zwischen Ein- und Auslass ist, und mindestens um einen Ein- oder Auslass ein Abdichtvorsprung vorgesehen ist und wobei das Hahnküken ein Sperrelement hat, welches durch Rotation des Hahnkükens schwenkbar ist und in Sperrposition des Absperrhahns einen Ein- oder Auslass durch fluiddichten Kontakt mit dem Abdichtvorsprung versperrt.

In einer beliebigen Ausführungsform der Erfindung ist vorzugsweise das Ventilgehäuse und/oder das Verschlusselement aus einem Metall oder einer Metalllegierung gebildet, vorzugsweise wobei es eisenhaltig ist. Metalllegierungen oder daraus gelöste Metallionen können als Katalysator für chemische Reaktionen dienen, inklusive zu explosionsartigen Reaktionen. Bei Verwendung von Metallen ist daher die erfindungsgemäße Vermeidung von Toträumen und Ablagerungen im Absperrorgan besonders vorteilhaft, um derartige Reaktionen zu vermeiden. Das Ventilgehäuse und/oder das Verschlusselement können aus verschiedenen Materialien hergestellt sein, wie Stahl, Edelstahl, Keramik, Sintermetallen, Aluminium, Kunststoff, Verbundwerkstoffen, Buntmetallen oder Edelmetallen. Bevorzugte Werkstoffe sind alle Eisen, Eisenlegierungen, Chrom-Nickelstähle, Nickelstähle (z.B. Hastelloy-Materialien), Titan, Tantal, Siliziumcarbid, Glas, Keramik, Gold, Platin und auch Kunststoffe. Spezielle Materialien sind Legierungen mit hohem Molybdängehalt bzw. Nickel, Chrom und Molybdän-Legierungen zur Beständigkeit gegen Lochfraß und Spaltkorrosion oder Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Spannungskorrosionsrisse in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion). Das Ventilgehäuse und/oder das Verschlusselement können aber auch aus beschichteten Materialien hergestellt sein. Zur Verbesserung der Dichtwirkung kann das Verschlusselement, gegebenenfalls auch das Ventilgehäuse gehärtet ausgeführt sein. Zusätzlich können Verschlusselement und/oder Ventilgehäuse zumindest teilweise, insbesondere im Bereich der Dichtflächen geschliffen ausgeführt sein.

Vorzugsweise ist der Durchmesser des Verschlusselements zwischen 0,5 cm bis 100 cm, vorzugsweise zwischen 1 cm bis 80 cm, zwischen 2 cm und 50 cm, zwischen 3 cm und 30 cm oder zwischen 5 cm und 20 cm.

Beliebige Fluide können durch das erfindungsgemäße Absperrorgan zwischen Einlass und Auslass geleitet werden. Vorzugsweise wird Fluid vom Einlass zum Auslass geleitet. Die Flussrichtung kann auch gekehrt werden, d.h. vom Auslass zum Einlass. Das Absperrorgan kann in einer Leitung, insbesondere einer Rohrleitung, vorgesehen werden. In der Leitung können eine oder mehrere Überdruckentlastungsvorrichtungen vorgesehen werden, vorzugsweise Überdruckentlastungsvorrichtungen basierend auf Berstelementen. Die Verwendung von Überdruckentlastungsvorrichtungen ist allgemein bekannt. Übliche Mittel umfassen beispielsweise Berstscheiben, welche eine Membran aufweisen, die unter Wirkung eines Drucks, der höher ist als der normale Betriebsdruck, aber geringer ist als der Druck, bei dem ein Rohr oder Gefäß selbst bricht, berstet, wodurch eine Druckentlastung mit einem Außenraum ermöglicht wird. Berstscheiben sind beispielsweise in der US 6,241,113, US 3,845,879, US 2008/0202595, EP 1 591 703 und der US 7,870,865, US 4,079,854, US 3,872,874, WO 2005/054731, EP 789 822 beschrieben. Die US 5,337,776 betrifft eine Rohrleitung mit einer Überdruckentlastungsvorrichtung, wobei eine Berstscheibe in der Innenseite der Wand des Rohres bündig liegt, damit ein Umspülen der Berstscheibe mit transportierter Flüssigkeit bewerkstelligt wird.

In bevorzugten Ausführungsformen der Erfindung umfasst eine erfindungsgemäße Leitung mindestens zwei der erfindungsgemäßen Absperrorgane, insbesondere zwei, drei, vier, fünf, sechs oder mehr Absperrorgane. In besonderen Ausführungsformen ist mindestens eines der Absperrorgane ein dreiwegiges Absperrorgan, z.B. mit einem Einlass und zwei Auslässen oder mit zwei Einlässen und einem Auslass. In Kombination oder alternativ hierzu ist in besonderen Ausführungsformen eines der Absperrorgane ein zweiwegiges Absperrorgan mit einem Einlass und einem Auslass.

Die Erfindung betrifft weiters die Verwendung des Absperrorgans zur Steuerung des Durchflusses (z.B: zum Sperren oder Freigeben) eines Fluids. Vorzugsweise werden Verfahrensparameter gewählt, wobei in einer Durchlassposition oder Freiraum-Spülposition (z.B. bei 15°- 75° Drehung des Verschlusselements) des Verschlusselements
● der Differenzdruck zwischen Ein- und Auslass, welcher durch das Absperrorgan gebildet wird, mindestens 0,4 bar;
● das Spülstromverhältnis gebildet durch den Freiraumstrom geteilt durch den Strom durch die Bohrung (10) mindestens 0,1 % ist;
● die Nenn-Spaltgeschwindigkeit gebildet durch den Freiraumstrom geteilt durch Freiraumquerschnitt mindestens 0,1 m/min; und/oder
● die Freiraum-Austauschrate gebildet durch den Freiraumstrom geteilt durch das Freiraumvolumen mindestens 1 1/min;
ist.

Der Differenzdruck zwischen Ein- und Auslass, welcher durch das Absperrorgan gebildet wird, soll mindestens 0,4 bar, vorzugsweise mindestens 0,5 bar, mindestens 0,6 bar, mindestens 0,7 bar, mindestens 0,8 bar, mindestens 1 bar, betragen. Durch einen höheren Differenzdruck zw. Ein und Auslass, wird ein größerer Anteil an Fluid durch den Freiraum zur Totzonenvermeidung geleitet, alternativ zum direkten Fluss zwischen Ein- und Auslass durch die Bohrung durch das Verschlusselement.

Hiermit verbunden ist vorzugsweise das Spülstromverhältnis gebildet durch den Freiraumstrom geteilt durch den Strom durch die Bohrung durch das Verschlusselement mindestens 0,1 %, vorzugsweise mindestens 0,2%, mindestens 0,3%, mindestens 0,5%, mindestens 0,75%, mindestens 1%, oder mindestens 1,5%.

Die Nenn-Spaltgeschwindigkeit gebildet durch den Freiraumstrom geteilt durch Freiraumquerschnitt beträgt vorzugsweise mindestens 0,05 m/min, besonders bevorzugt mindestens 0,1 m/min, mindestens 0,75 m/min, oder mindestens 1 m/min.

Die Freiraum-Austauschrate gebildet durch den Freiraumstrom geteilt durch das Freiraumvolumen wird vorzugsweise so eingestellt, dass sie mindestens 1 1/min, vorzugsweise mindestens 1,5 1/min, oder mindestens 2 1/min, beträgt.

Diese Parameter sind eng mit dem Druckwiderstand in der Bohrung verbunden (sofern diese vorhanden ist). Durch bauliche Elemente diesen Druckwiderstand zu erhöhen, können die Parameter erhöht werden und somit größere Flussraten über den Freiraum geleitet werden. Derartige Elemente sind beispielsweise Verengungen der Bohrung vor dem Auslass (aber nach entsprechenden Abzweigungen zur Spülung des Freiraums) oder Widerstandselemente wie Lochplatten. Auch ist es möglich durch Verdrehung des Verschlusselements aus der vollständigen Offenposition heraus (Spülstellung, z.B. 15°-75°) den Druckwiderstand zu erhöhen um somit größere Flussraten im Freiraum zu ermöglichen.

Weiters sieht die Erfindung ein Absperrorgan vor, bei dem bei Verwendung eines Fluids aus Cellulose 12,9%; NMMO (N-MethylMorpholin-N-Oxid) 76,3 %; Wasser 10,8% bei 94°C die genannten Parameter, ausgewählt aus Differenzdruck, Spülstromverhältnis, Nenn-Spaltgeschwindigkeit und/oder Freiraum-Austauschrate, erfüllt. Derartige Ausgestaltungen des Absperrorgans lassen sich wie in den Beispielen beschrieben testen.

Die Geometrie des Absperrorgans ist vorzugsweise derart ausgeführt, dass:
- Freiräume zwischen Verschlusselement und Gehäuse des Absperrorgans geschaffen werden.
- Die Freiräume Zu- und Abfuhröffnungen aufweisen, damit kein Totraum mit Fluid entstehen kann.
- Die Freiräume durch Teilströme oder durch den Gesamtstrom des durchströmenden Fluids direkt durchspült werden.
Unter Zugrundelegung der gewählten Geometrie sollte das Absperrorgan so geführt werden, dass eine ausreichende treibende Druckdifferenz zwischen Ein- und Auslauf des Absperrorgans herrscht, welche ein gesichertes Spülen der Freiräume gewährleistet, speziell im Fall von instabilen Fluiden.
Zur Festlegung der geeigneten Konfiguration und der geeigneten Verfahrensparameter (Durchsatz, Druckdifferenz) sollten erfindungsgemäß das Spülstromverhältnis (FV), die Nenn-Spaltgeschwindigkeit (v_{F}), die Freiraum-Austauschrate (FA), und die Spülzahl (SZ) (wie jeweils in Beispiel 1 näher beschrieben) oberhalb der erfindungsgemäßen Werte liegen.

In einem besonders bevorzugten Aspekt betrifft die Erfindung die Verwendung eines Absperrorgans in einer Leitung, insbesondere beim Transport chemisch instabiler Fluide. Hierbei wird vorzugsweise das erfindungsgemäße Absperrorgan verwendet, wobei Fluid über den Einlass in das Absperrorgan einfließt und über den Auslass aus dem Absperrorgan austritt. In der Regel ist hierfür der Fluiddruck am Einlass größer als am Auslass. In alternativen Ausführungsformen kann auch die Flussrichtung umgedreht werden und Fluid am Auslass eintreten und am Einlass (mit den Dichtflächen) austreten.

Fluide, bei denen der Einsatz des erfindungsgemäßen Absperrorgans besonders zur Geltung kommt, sind chemisch instabile Fluide, die bei Ablagerung im Absperrorgan korrosiv oder explosionsgefährdet sind.

In besonders bevorzugten Ausführungsformen ist das Fluid eine Formmasse, vorzugsweise eine Spinnmasse. Beispielsweise kann das Fluid eine Cellulose-Lösung, vorzugsweise eine Lösung von Cellulose mit einem Aminoxid, insbesondere bevorzugt mit NMMO (N-Methylmorpholin-N-oxid), sein.

Vorzugsweise ist das chemisch instabile Fluid thermisch instabil. Thermisch instabile Fluide sind beispielsweise Cellulose-Lösungen, wie Cellulose-Aminoxid-Lösungen, im Speziellen Lösungen von tertiärem Aminoxid und Wasser. Solche Lösungen können neben Stabilisatoren, wie z.B. Gallussäurepropylester, organische oder anorganische Basen, wie z.B. Natronlauge, enthalten. Weiters können solche Cellulose-/Aminoxid- und Wasser-Lösungen auch produktverändernde Additive, sogenannte Inkorporationsmedien, enthalten. Cellulose-Lösungen, im Aminoxidsystem hergestellt, zeichnen sich dadurch aus, dass sie beim Erkalten kristallisieren, aber bei einer Temperatur von ca. 72 - 75 °C geschmolzen werden können. Ein Beispiel ist eine Cellulose-NMMO-Lösung wie in der EP 789 822 beschrieben. Das Fluid kann eine wässrige Aminoxidlösung unterschiedlicher Konzentrationen sein. Thermisch instabile Fluide sind solche, bei denen die Gefahr einer Temperaturerhöhung während dem Transport durch das Verbindungsstück bzw. die Wärmetauscherleitung besteht. Temperaturerhöhungen können z.B. aufgrund von exothermen Reaktionen, insbesondere chemischen Reaktionen, oder aufgrund von Reibungswärme beim Transport hochviskoser Fluide auftreten. Weitere Fluide sind insbesondere erstarrbare Fluide, insbesondere "hot-melts", wie Polymere, Polycarbonate, Polyester, Polyamide, Polymilchsäure, Polypropylen, etc. Das Fluid kann ein thixotropes Fluid, insbesondere eine Spinnlösung, sein. Spezielle Fluide haben eine Schmelztemperatur von mindestens ca. 40°C, mindestens 50°C, mindestens 55°C, mindestens 60°C, mindestens 65°C, mindestens 70°C, mindestens 75°C. Das Fluid kann bei beispielhaften Temperaturen von mindestens ca. 40°C, mindestens 50°C, mindestens 55°C, mindestens 60°C, mindestens 65°C, mindestens 70°C, mindestens 75°C, mindestens ca. 80°C, mindestens 85°C, mindestens 90°C, mindestens 95°C, geführt werden. Das Verbindungsstück ist für den Transport dieser Fluide über den Schmelztemperaturen - z.B. gemäß gewählter Temperiermittel - ausgelegt. Vorzugsweise ist die Nullscherviskosität des Fluids im Bereich von 10 bis 25.000 Pas, insbesondere zwischen 50 bis 20.000 Pas.

In einem weiteren Aspekt betrifft die vorliegende Erfindung ein Verfahren zur Herstellung von Formkörpern aus einer fluiden Formmasse, umfassend Transportieren einer fluiden Formmasse durch eine Leitung mit einem Absperrorgan nach der Erfindung, wobei die Leitung zu einer Formungseinheit führt, insbesondere einem Extruder, mit Öffnungen, durch welche die Formmasse gepresst und dadurch geformt wird, und Verfestigen der Formmasse, vorzugsweise durch Erstarrung oder Koagulation. Vorzugsweise ist die Leitung eine Rohrleitung. Die Leitung kann über den Auslass des Absperrorgans mit der Formungseinheit verbunden sein. Die Flussrichtung kann auch umgedreht werden, wobei in dieser Ausführungsform der Einlass (mit den Dichtflächen) über die Leitung mit der Formungseinheit verbunden ist.

Formungseinheiten sind hinlänglich bekannt, z.B. wie in der EP 0 700 463 B1, EP 0 671 492 B1, EP 0 584 318 B1, oder der EP 1 463 851 B1 beschrieben. Vorzugsweise umfasst die Formungseinheit Öffnungen, durch die die Masse geformt wird, insbesondere eine Extrusionseinheit, einen Luftspalt, durch den die geformten Formkörper geführt werden und ein Koagulationsbad, in dem die Formkörper erstarren, z.B. durch Lösungsmittelaustausch.

Die vorliegende Erfindung wird weiters durch die folgenden Figuren als Beispiele näher erläutert, ohne auf diese Ausführungsformen der Erfindung beschränkt zu sein.

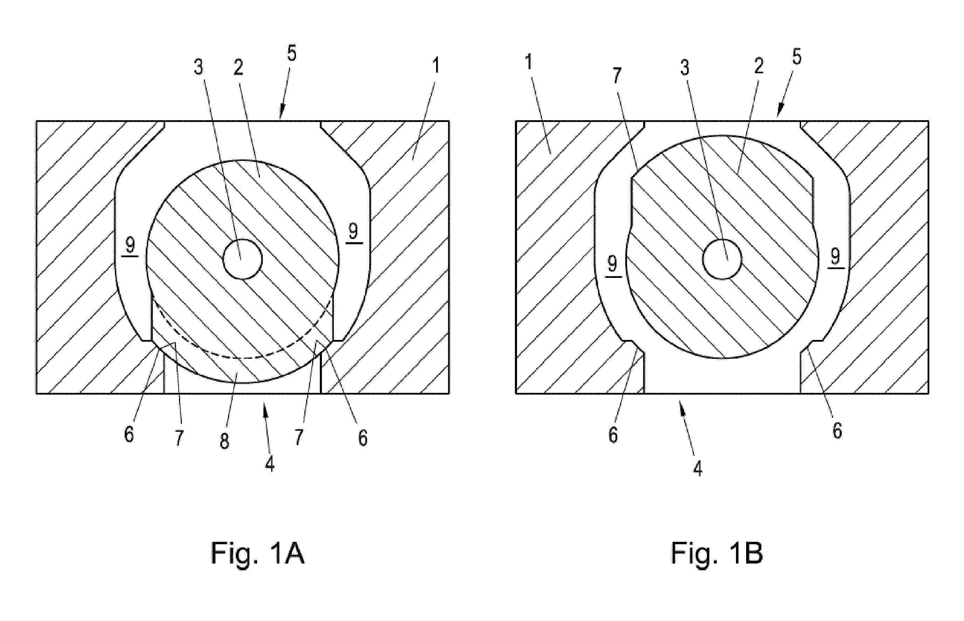

Fig. 1 zeigt einen Schnitt durch ein erfindungsgemäßes Absperrorgan mit einem Ventilgehäuse (1), einem massiven Verschlusselement (2), welches auf einer Welle (3) im Innenraum des Gehäuses gelagert ist. Zum Innenraum führt ein Einlass (4) und ein Auslass (5) des Absperrorgans. In Sperrposition (Fig. 1A) liegen eine Dichtfläche (6) des Gehäuses mit einer Dichtfläche (7) des Verschlusselements aneinander. In Öffnungsposition (Fig. 1B) ist die Dichtfläche (7) des Verschlusselements von der Dichtfläche (6) des Gehäuses weg gerichtet. Die Dichtflächen des Verschlusselements sind an einem Vorsprung (8) vorgesehen, welcher einen höheren Abstand (Radius) zur Achse bzw. zum Mittelpunkt aufweist als andere Bereiche des Verschlusselements. Diese anderen Bereiche des Verschlusselements können auch als Vertiefung im Vergleich zum Vorsprung (8) angesehen worden. Ebenso ist die Dichtfläche des Gehäuses an einem Vorsprung vorgesehen, welcher einen Freiraum (9), der zum Auslass führt, begrenzt.

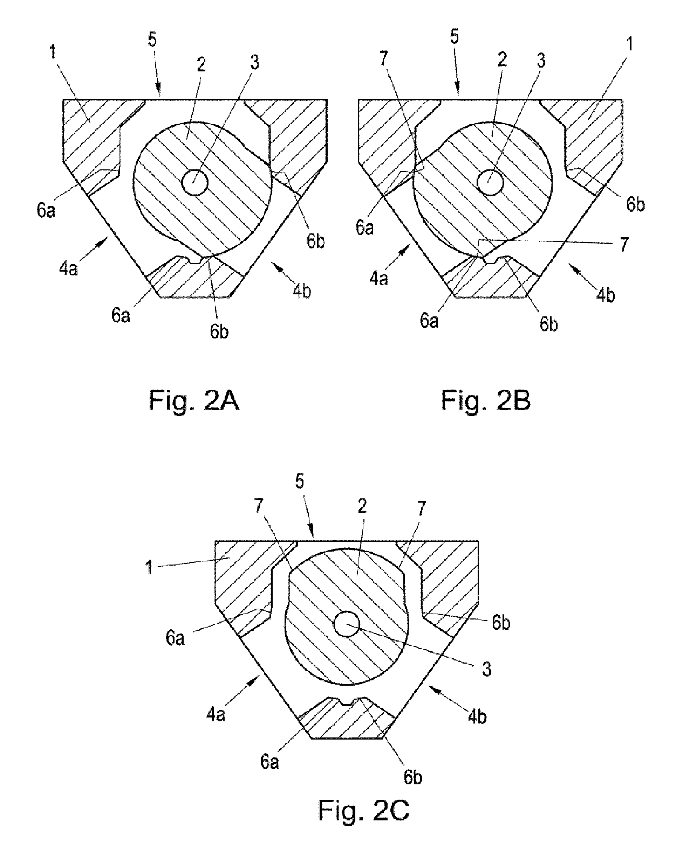

Fig. 2 zeigt ein ähnliches Absperrorgan wie in Fig. 1 beschrieben, mit dem Unterschied, dass dieses Absperrorgan ein dreiwegiges mit zwei Einlässen (4a, 4b) ist. Jeder Einlass verfügt über eigene Dichtflächen (6a, 6b). Das Verschlusselement kann durch Rotation wechselweise einen der beiden Einlässe blockieren (Fig. 2A und 2B), oder beide Einlässe freigeben (Fig. 2C), indem die Dichtflächen des Verschlusselements von beiden Einlässen fort gerichtet werden.

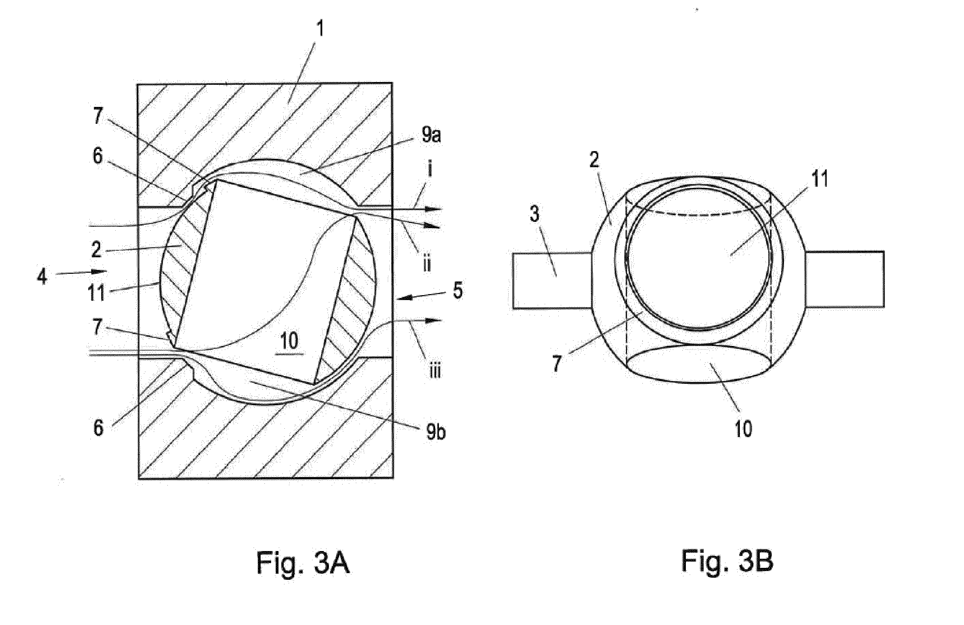

Fig. 3A zeigt einen Schnitt durch ein erfindungsgemäßes Absperrorgan mit einem Ventilgehäuse (1), einem massiven Verschlusselement (2), welches auf einer Welle (3) im Innenraum des Gehäuses gelagert ist. Die Welle ist in dieser Ausführungsform nicht durchgängig, d.h. sie wird am Verschlussteilkörper außen angebracht, sodass die Durchflussbohrung (10) frei bleibt. Zum Innenraum führt ein Einlass (4) und ein Auslass (5) des Absperrorgans. Dichtflächen (6) des Gehäuses sind an einem Vorsprung vorgesehen bzw. der restliche Raum um das Verschlusselement ist eine Vertiefung. Ebenso ist die ringförmige Dichtfläche des Verschlusselements auf einem Vorsprung vorgesehen. Eine Vertiefung (11) ist im Randbereich des Verschlusselements zwischen bzw. innerhalb der Dichtfläche vorgesehen. Durch das Verschlusselement hindurch ist eine Durchflussbohrung (10) für den Hauptdurchfluss von Fluid durch das Schlusselement vorgesehen. In Fig. 3 sind zudem die möglichen Flussrichtungen für das Fluid vom Einlass zum Auslass eingezeichnet, und zwar i) über den Freiraum 9a, ii) über die Durchflussbohrung (10) und anschließend über den Freiraum 9a und iii) über den Freiraum 9b.

Fig. 3B zeigt die räumliche Darstellung auf das Verschlusselement des Absperrorgans der Fig. 3A mit Blickrichtung vom Einlass auf das Verschlusselement, welches teilkugelförmig ausgeführt ist.

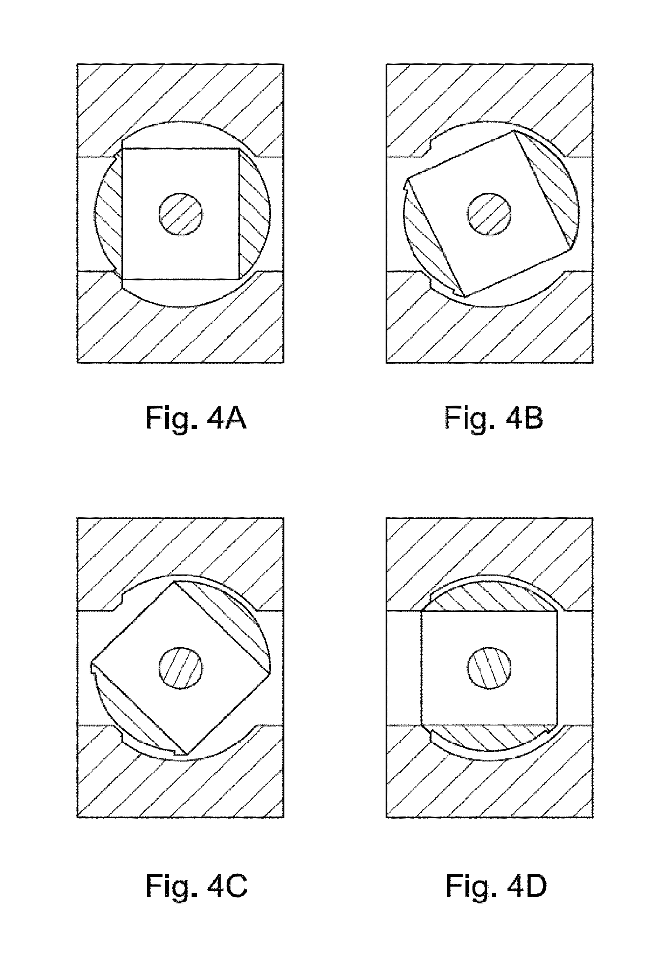

Fig. 4 zeigt den Kugelhahn der Fig. 3A und 3B in verschiedenen Rotationsorientierungen des Verschlusselements: 4A 0° (Sperrposition), 4B 25° (teiloffen), 4C 45° (teiloffen) und 4D 90° (vollständige Öffnungsposition); in den teilweisen Öffnungspositionen wird der Freiraum um das Verschlusselement gespült, in der vollständigen Öffnungsposition ist der Freiraum weiterhin mit dem Auslass fluiddurchlässig verbunden.

Fig. 5 zeigt einen vergleichenden Kugelhahn mit zwei Dichtflächenpaaren (6) am Ein- und Auslass. A: vollständig geöffnete Stellung, B: geschlossene Stellung, C: geöffnete Stellung, wobei gekreuzt/ schraffierter der Verlauf des Durchflussstromes und in schwarz hervorgehobener der Spülstrom (Freiraumvolumen) gezeigt ist.

Fig. 6 zeigt einen Kugelhahn mit einer Dichtfläche (6) am Einlass. A, B und C analog zu Fig. 5.

Fig. 7 zeigt einen Kugelhahn mit einer Dichtfläche (6) am Einlass. Der Freiraum wird durch Vertiefungen (11) am Gehäuse und am Verschlusselement (2, 11) gebildet. A, B und C analog zu Fig. 5.

Fig. 8 zeigt einen Kugelhahn mit einer Dichtfläche (6) am Einlass. Zusätzlich sind in der Nähe des Einlasses nach den Dichtflächen Bohrungen (12) als Zufluss zum Freiraum vorgesehen. A, B und C analog zu Fig. 5.

Fig. 9 zeigt einen Kugelhahn mit einer Dichtfläche (6) am Einlass. Zusätzlich sind in der Nähe des Einlasses nach den Dichtflächen Bohrungen (12) als Zufluss zum Freiraum vorgesehen und weiters eine Verengung (13) in der Durchlassbohrung. A, B und C analog zu Fig. 5.

Fig. 10 zeigt einen Kugelhahn mit einer Dichtfläche (6) am Einlass. Zusätzlich sind in der Nähe des Einlasses nach den Dichtflächen Bohrungen (12) als Zufluss zum Freiraum vorgesehen und weiters eine Verengung (13) und ein Lochblech (14) in der Durchlassbohrung vorgesehen. A, B und C analog zu Fig. 5.

Fig. 11 zeigt einen Kugelhahn mit einer Dichtfläche (6) am Einlass. Zusätzlich sind in der Nähe des Einlasses nach den Dichtflächen Bohrungen als Zugang zum Freiraum vorgesehen. Es ist keine Durchlassbohrung mittig durch das Verschlusselement vorgesehen. A, B und C analog zu Fig. 5.

Fig. 12 zeigt einen Kugelhahn mit einer Dichtfläche (6) am Einlass. Der Durchfluss wird gänzlich über die Freiräume geleitet (wie in Fig. 1). A, B und C analog zu Fig. 5.

Fig. 13 zeigt eine Messanordnung zur Ermittlung von Kenngrößen diverser Ausgestaltungsformen des Absperrorgans. Die Messanordnung enthält einen Fluidzufluss und Abfluss und das Absperrorgan (21) sowie ein weiteres Absperrorgan (22) und einen Druckmesser (PI).

### Beispiele:

### Beispiel 1: Flussparameter für viskose Fluide

Zur Ermittlung der erfindungsgemäßen Konfiguration des Absperrorgans ist es notwendig, die innere Geometrie des Absperrorgans den Verfahrensbedingungen anzupassen. Würde man lediglich eine Standardarmatur ohne Berücksichtigung der Verfahrens- und Medienparameter einsetzen, käme es bei Variation des Mediums oder der Durchflussmenge zu Betriebszuständen, die eine sichere Führung des Verfahrens nicht mehr gewährleisten.

Die genaue geometrische Ausführung des Absperrorgans sollte daher an Verfahrensbedingungen entsprechend der erfindungsgemäßen Zusammenhänge angepasst werden. Entspricht eine Konfiguration (die Kombination aus geometrischen Parametern des Absperrorgans und den gegebenen Verfahrensparametern, wie Viskosität, Scherverhalten, Temperatur, ...) nicht den erfindungsgemäßen Parametern, so kann der Austausch von Fluid im Freiraumvolumen zu gering ausfallen, um exotherme Reaktionen, die bei Ablagerungen von thermisch instabilen Fluiden, wie z.B. Cellulose/NMMO/Wasser-Gemischen auftreten, zu vermeiden.

Zur "maßgeschneiderten" Konfiguration wurden Versuche unter Betriebsbedingungen durchgeführt um die optimale Geometrie festzulegen, sodass einerseits die Spülung der Freiräume in ausreichendem Maße erfolgt, andererseits aber auch vertretbare (nicht zu hohe) Druckverluste beim Durchgang durch das Absperrorgan entstehen.

Die Zusammenhänge zwischen Spaltgeometrie, Geometrie des Verschlusselements, sowie Materialparameter des zu transportierenden Fluids wurden durch iteratives Annähern der Geometrien gefunden.

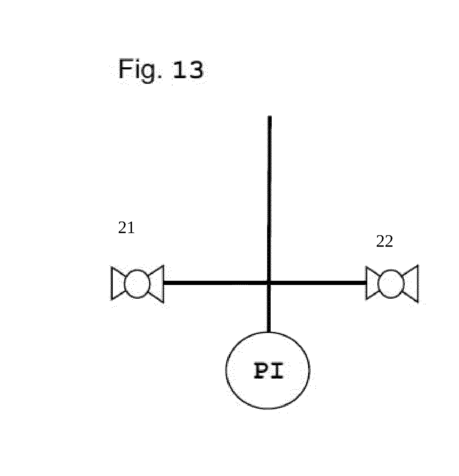

Zur Anpassung der Geometrien an die Betriebsbedingungen wurde, wie folgt vorgegangen:
Fluid wurde unter Betriebsbedingung (Zusammensetzung, Temperatur, Durchflussmenge) der Versuchsanordnung (siehe Fig. 13) zugeführt.

In einem ersten Schritt bleibt das Drosselorgan (21) geschlossen und die gesamt Fluidmenge (Vp [dm³/min]) wird über das zu konfigurierende geöffnete Absperrorgan (22) geleitet. Druck (p [bar]) und Durchflussmenge (Vp [dm³/min]) werden ermittelt und aufgezeichnet.

Im nächsten Schritt wird das Drosselorgan (21) so weit geöffnet, dass sich der zuvor ermittelte Druck einstellt. Im zu konfigurierende Absperrorgan wird das Verschlusselement durchgangsseitig verschlossen, so dass nur über die Freiräume (Spülspalte) Fluid geführt wird. Der Freiraumstrom (V_{F} [dm³/min]) wird gemessen.
Aus den Messwerten werden folgende Werte errechnet:
1) Spaltgeschwindigkeit (v_{F} [m/min])(Anm.: >0, 1) :
   Freiraumstrom (V_{F} [dm³/min]) geteilt durch Freiraumquerschnitt, wobei der Freiraumquerschnitt aus n geteilt durch 4 multipliziert mit der Differenz von Durchmesser Gehäuse zum Quadrat (D_{G}² [dm²]) abzüglich Durchmesser Verschlusselement in Durchgangsstellung zum Quadrat (Dᵥ² [dm²]) errechnet wird.
2) Freiraum-Austauschrate (FA [1/min])(Anm.:>1):
   Freiraumstrom (V_{F} [dm³/min]) geteilt durch das Freiraumvolumen (F_{ges} [dm³]
3) Spülstromverhältnis (FV [%]):
   Freiraumstrom (V_{F} [dm³/min]) geteilt durch Produktstrom (V_{P} [dm³/min])
4) Spülzahl (SZ) (Anm.: >0):
   Logarithmus des Ergebnisses aus 1000 mal Spülstromverhältnis (FV [%]) multipliziert mit Spaltgeschwindigkeit (v_{F} [m/min]) geteilt durch Freiraum-Austauschrate (FA [1/min])

Es hat sich herausgestellt, dass der Freiraum (auch Spülspalt oder Spalt genannt) alleine nicht ausreicht, um im Fall der genannten Cellulose/NMMO/Wasser-Gemische eine ausreichende totraumfreie Spülung dieses Freiraumes zu erreichen. Erst durch geeignete Maßnahmen, die das Druckgefälle zwischen Eingang und Ausgang des Absperrorgans erhöhen ist, war es möglich die erfindungsgemäßen Kennwerte für Spaltgeschwindigkeit (v_{F} [m/min], Freiraum-Austauschrate (FA [1/min]) und für die Spülzahl (SZ) zu erreichen und dadurch einen sicheren Transport viskoser instabiler Fluide zu ermöglichen.
Geeignete Maßnahmen zur Bereitstellung des nötigen Differenzdrucks sind:
1) Reduktion des Durchlassproduktstroms durch periodisches Eindrosseln das Verschlusselements
2) Reduktion des Durchgangsdurchmessers des Verschlusselements
3) Einbau eines Widerstands in den Durchgangsdurchmessers des Verschlusselements
4) Leiten des gesamten Produktstroms über den gespülten Freiraum

### Beispiele 2-9:

Eine Extrusionslösung, bestehend aus Cellulose, NMMO und Wasser mit einer Cellulose-Konzentration von 12,5% wurde bei einer Temperatur von ca. 94°C zur Verifizierung der Einsetzbarkeit des Absperrorgans eingesetzt.

**Tabelle:**

| **Beispiel** | | | 2 | 3 | 4 | 5 | 6 | 7 | 8 | 9 |
|---|---|---|---|---|---|---|---|---|---|---|
| **Nenn-Durchmesser** | **DN** | **mm** | 63 | 63 | 63 | 54 | 63 | 63 | 63 | 63 |
| **Produktstrom** | **V_{P}** | **dm³/min** | 7,27 | 10,55 | 5,98 | 7,29 | 7,11 | 5,21 | 4,95 | 5,74 |
| **Strömungsgeschwindigkeit** | **V_{N}** | **m/min** | 2,33 | 3,38 | 1,92 | 3,19 | 2,28 | 1,67 | 1,59 | 1,84 |
| **Differenzdruck** | **p** | **bar** | 0,2 | 0,3 | 2,8*) | 0,3 | 1,4 | 2,6 | 2,8 | 0,5 |
| **Durchlass-Volumenstrom** | **V_{D}** | **dm³/min** | 7,27 | 10,55 | 5,85 | 7,28 | 6,93 | 5,05 | - | - |
| **Freiraum Strom** | **V_{F}** | **dm³/min** | - | - | 0,13 | 0,02 | 0,18 | 0,16 | 4,95 | 5,74 |
| **Spülstromverhältnis** | **FV** | | 0,0% | 0,0% | 2,1% | 0,3% | 2,5% | 3,1% | 100% | 100% |
| **Durchmesser Gehäuseinnenraum** | **D_{G}** | **mm** | 105 | 105 | 102 | 108 | 105 | 102 | 111 | 102 |
| **Durchmesser Verschlusselement in Durchgangsstellung** | **Dv** | **mm** | 96 | 96 | 96 | 96 | 96 | 96 | 96 | 72 |
| **Nenn - Spaltgeschwindigkeit** | **V_{F}** | **m/min** | - | - | 0,13 | 0,01 | 0,13 | 0,17 | 2,03 | 1,40 |
| **Freiraumvolumen gesamt** | **F_{ges}** | **cm³** | 123 | 140 | 59 | 150 | 87 | 67 | 164 | 329 |
| **Freiraum-Austauschrate** | **FA** | **1/min** | - | - | 2,13 | 0,13 | 2,05 | 2,43 | 30,14 | 17,47 |
| **Spülzahl** | **SZ** | | - | - | 0,123 | -0,677 | 0,184 | 0,345 | 1,828 | 1,904 |

| | | | | | | | | | | |
|---|---|---|---|---|---|---|---|---|---|---|
| ***) ca. 15° geöffnet** | | | | | | | | | | |

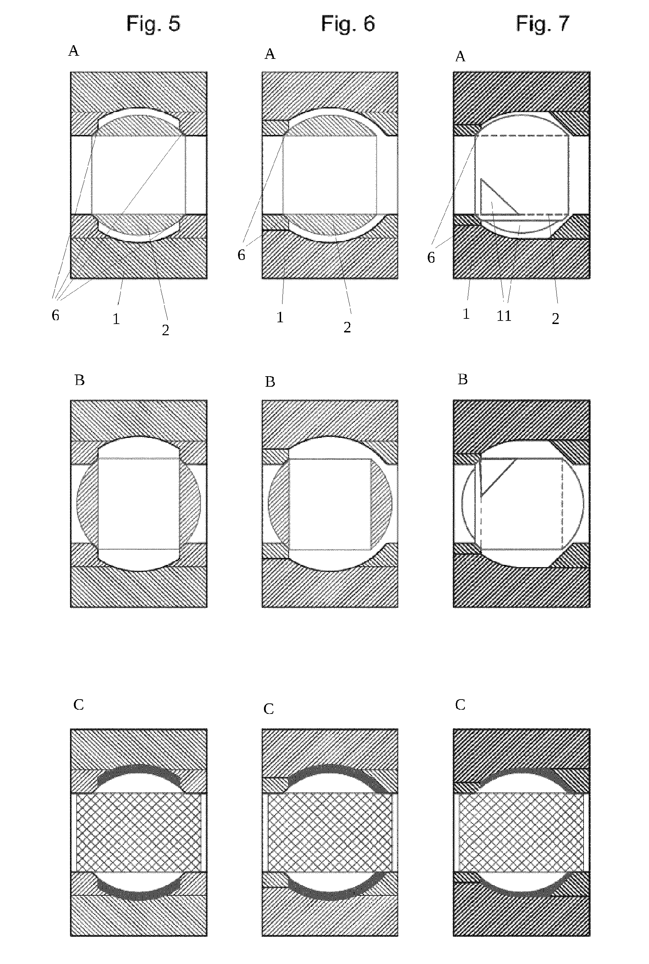

### Beispiel 2 (Fig. 5):

Ein herkömmlich ausgestatteter Kugelhahn mit beheiztem Gehäuse, Verschlusselement (Kugel) mit freiem Durchgang sowie eingangs- und ausgangsseitiger Abdichtung, welche zusammen mit der Kugeloberfläche und dem Gehäuseinnenraum einen abgeschlossenen Hohlraum bilden, wurde in die weiter oben beschriebene Versuchsanordnung eingebaut und getestet.

Der Kugelhahn wies einen Nenndurchmesser von 63 mm auf, der Gehäuseinnendurchmesser(D_{G}) betrug 105 mm, der Durchmesser des Verschlusselements quer zur Durchgangsrichtung (D_{V}) betrug 96 mm. Das nicht durchströmte Freiraumvolumen (F_{ges}) betrug 123cm³
Es wurde ein Produktstrom (V_{P}) von 7,3 dm³/min durchgeleitet. Bei einer Nenn-Strömungsgeschwindigkeit (v_{N}) von 2,33 m/min ergab sich dabei ein Druckverlust (p) von ca. 0,2bar.

Da keine Spülung des Freiraumes hinter den Dichtungen erfolgte, sind das Spülstromverhältnis, die Nenn-Spaltgeschwindigkeit, sowie die Freiraum Austauschrate mit 0 anzusetzen, somit konnte auch keine Spülzahl ermittelt werden.

Das Absperrorgan wurde als nicht geeignet für den Einsatzfall verifiziert.

### Beispiel 3 (Fig. 6):

Ein Kugelhahn wie in Beispiel 2, jedoch ohne ausgangsseitige Freiraumabdichtung (offener Freiraum) wurde getestet.
Das nicht durchströmte Freiraumvolumen (F_{ges}) betrug 140cm³.
Es wurde ein Produktstrom (V_{P}) von 10,55 dm³/min durchgeleitet. Bei einer Nenn-Strömungsgeschwindigkeit (v_{N}) von 3,38 m/min ergab sich dabei ein Druckverlust (p) von ca. 0,3 bar.
Da keine Spülung des offenen Freiraumes erfolgte, sind das Spülstromverhältnis, die Nenn-Spaltgeschwindigkeit, sowie die Freiraum Austauschrate mit 0 anzusetzen, somit konnte auch keine Spülzahl ermittelt werden.

Das Absperrorgan wurde in der Offenposition (90°) als nicht geeignet für den Einsatzfall verifiziert. Um eine Spülung des Freiraums zu ermöglichen ist ein Verdrehen des Verschlusselements in eine Spülposition (15°-75°) erforderlich, wobei der Freiraum durch die ungünstigen Strömungsverhältnisse nur teilweise gespült werden kann.

### Beispiel 4 (Fig. 7):

Ein Kugelhahn gemäß Beispiel 3, jedoch mit einem Verschlusselement mit Bereichen mit geringerem Abstand zur Achse als der Abstand zur Dichtfläche wurde in die weiter oben beschriebene Versuchsanordnung eingebaut und getestet.

Da im offenen Zustand kein Spülen des Freiraumes möglich war, wurde der Kugelhahn in wiederkehrenden Abständen (3 bis 4 Stunden) zum Spülen bis auf einen Öffnungswinkel von ca. 10 bis 15° geschlossen.

Der Kugelhahn wies einen Nenndurchmesser von 63 mm auf, der Gehäuseinnendurchmesser (D_{G}) betrug 102 mm, der Durchmesser des Verschlusselements quer zur Durchgangsrichtung (D_{V}) betrug 96 mm. Das in periodischen Abständen durchströmte Freiraumvolumen (F_{ges}) betrug 59cm³. Es wurde ein Produktstrom (V_{P}) von 5,98 dm³/min durchgeleitet. Bei einer Nenn-Strömungsgeschwindigkeit (v_{N}) von 1,92 m/min ergab sich dabei ein Druckverlust (p) von ca. 2,7bar.

Da die Spülung des Freiraumes hinter der Dichtung periodisch erfolgte, wurden während des Spülvorgangs die Kennzahlen ermittelt, dabei ergab sich ein Spülstromverhältnis (FV) von 2,1%, die Nenn-Spaltgeschwindigkeit (v_{F}) betrug 0,13 m/min, die Freiraum Austauschrate (FA) wurde auf einen Wert von 2,13 berechnet, somit Spülzahl (SZ) von 0,123.

Das Absperrorgan wurde als geeignet für den Einsatzfall verifiziert, dies ist durch die ermittelten Kennzahlen bestätigt.

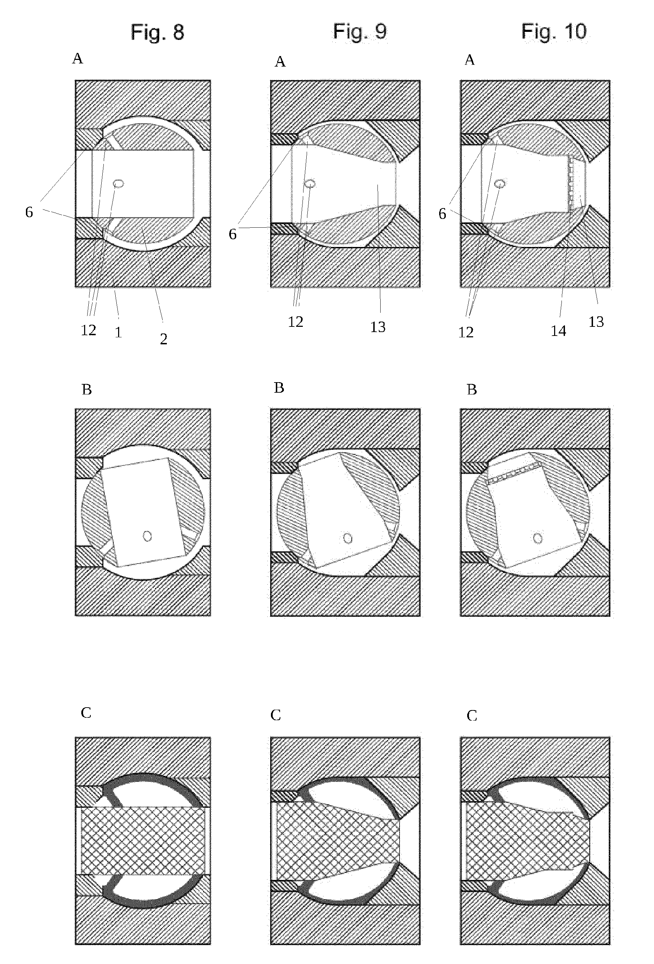

### Beispiel 5 (Fig. 8):

Ein Kugelhahn gemäß Beispiel 3, jedoch mit einer Kugel versehen, welche radial angeordnete Bohrungen zur Verbindung des Durchlassraumes mit dem Freiraum aufwies wurde den oben angeführten Tests unterzogen. Die Bohrungen waren derart angeordnet, dass ein Teilstrom des Produktstromes direkt an die Dichtlippe des Freiraums herangeführt wurde und somit sowohl Dichtung als auch Freiraum kontinuierlich gespült werden konnten. Das Verschlusselement (die Kugel) wies einen durchgängig freien Durchgang von 54mm auf.

Der Kugelhahn hatte einen Nenndurchmesser von 54 mm, der Gehäuseinnendurchmesser (D_{G}) betrug 105 mm, der Durchmesser des Verschlusselements quer zur Durchgangsrichtung (D_{V}) betrug 96 mm. Das durchströmte Freiraumvolumen (F_{ges}) betrug 150cm³.
Es wurde ein Produktstrom (V_{P}) von 7,29 dm³/min durchgeleitet. Bei einer Nenn-Strömungsgeschwindigkeit (v_{N}) von 3,19 m/min ergab sich dabei ein Druckverlust (p) von ca. 0,3bar.

Die Spülung des Freiraumes hinter der Dichtung erfolgte kontinuierlich, dabei wurden folgende Kennzahlen ermittelt: ein Spülstromverhältnis (FV) von 0,3%, die Nenn-Spaltgeschwindigkeit (v_{F}) betrug 0,01 m/min, die Freiraum Austauschrate (FA) wurde auf einen Wert von 0,13 berechnet, somit ergab sich eine Spülzahl (SZ) von -0,677.

Obwohl Spülkanäle vorgesehen waren, kann aufgrund der geringen Spülung des Freiraumes in der vollständigen Offenposition nicht von einer zuverlässigen Durchspülung ausgegangen werden, somit ist diese Konfiguration nicht für den Einsatz geeignet. Um eine Spülung des Freiraums zu ermöglichen ist ein Verdrehen des Verschlusselements in eine Spülposition (15°-75°) erforderlich, wobei dennoch in Bereichen hinter der Dichtung zwischen den Bohrungen (12) Toträume entstehen können.

### Beispiel 6 (Fig. 9)

Das Verschlusselement (die Kugel) wies eine in Flussrichtung sich verjüngende Durchgangsbohrung zur Erhöhung des Druckgefälles auf.

Der Kugelhahn hatte einen Nenndurchmesser von 63 mm, der Gehäuseinnendurchmesser (D_{G}) betrug 105 mm, der Durchmesser des Verschlusselements quer zur Durchgangsrichtung (D_{V}) betrug 96 mm. Das durchströmte Freiraumvolumen (F_{ges}) betrug 87cm³. Es wurde ein Produktstrom (V_{P}) von 7,11 dm³/min durchgeleitet. Bei einer Nenn-Strömungsgeschwindigkeit (v_{N}) von 2,28 m/min ergab sich dabei ein Druckverlust (p) von ca. 1,4 bar.

Die Spülung des Freiraumes hinter der Dichtung erfolgte kontinuierlich, dabei wurden folgende Kennzahlen ermittelt: ein Spülstromverhältnis (FV) von 2,5%, die Nenn-Spaltgeschwindigkeit (v_{F}) betrug 0,13 m/min, die Freiraum Austauschrate (FA) wurde auf einen Wert von 2,05 berechnet, somit ergab sich eine Spülzahl (SZ) von 0,184.

Das Absperrorgan wurde als geeignet für den Einsatzfall verifiziert, dies ist durch die ermittelten Kennzahlen bestätigt.

### Beispiel 7 (Fig. 10):

Ein Kugelhahn gemäß Beispiel 6, jedoch wurde zusätzlich zur sich verjüngenden Durchgangsbohrung in die Kugelbohrung noch ein Widerstandselement (Platte mit Bohrungen) eingesetzt.

Der Kugelhahn wies einen Nenndurchmesser von 63 mm auf, der Gehäuseinnendurchmesser (D_{G}) betrug 102 mm, der Durchmesser des Verschlusselements quer zur Durchgangsrichtung (D_{V}) betrug 96 mm. Das durchströmte Freiraumvolumen (F_{ges}) betrug 67 cm³.

Es wurde ein Produktstrom (V_{P}) von 5,21 dm³/min durchgeleitet. Bei einer Nenn-Strömungsgeschwindigkeit (v_{N}) von 1,67 m/min ergab sich dabei ein Druckverlust (p) von ca. 2,6 bar.

Die Spülung des Freiraumes hinter der Dichtung erfolgte kontinuierlich, dabei wurden folgende Kennzahlen ermittelt: ein Spülstromverhältnis (FV) von 3,1%, die Nenn-Spaltgeschwindigkeit (v_{F}) betrug 0,17 m/min, die Freiraum Austauschrate (FA) wurde auf einen Wert von 2,43 berechnet, somit ergab sich eine Spülzahl (SZ) von 0,345.

Das Absperrorgan wurde als geeignet für den Einsatzfall verifiziert, dies ist durch die ermittelten Kennzahlen bestätigt.

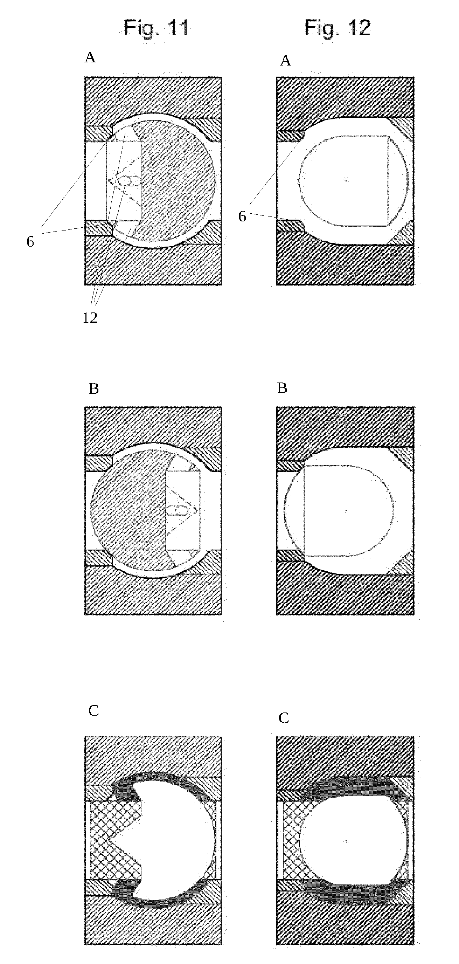

### Beispiel 8 (Fig. 11):

Ein Kugelhahn gemäß Beispiel 6, jedoch wurde die Durchgangsbohrung komplett verschlossen, so dass der gesamte Produktstrom über die radial nach außen laufenden Spülbohrungen durch den Freiraum hindurch zum Ablauf des Absperrorgan geleitet wurde. Der Kugelhahn wies einen Nenndurchmesser von 63 mm auf, der Gehäuseinnendurchmesser (D_{G}) betrug 111 mm, der Durchmesser des Verschlusselements quer zur Durchgangsrichtung (D_{V}) betrug 96 mm. Das durchströmte Freiraumvolumen (F_{ges}) betrug 164cm³.

Es wurde ein Produktstrom (V_{P}) von 4,95 dm³/min durchgeleitet. Bei einer Nenn-Strömungsgeschwindigkeit (v_{N}) von 1,59 m/min ergab sich dabei ein Druckverlust (p) von ca. 2,8 bar.

Es wurden folgende Kennzahlen ermittelt: ein Spülstromverhältnis (FV) von 100%, die Nenn-Spaltgeschwindigkeit (v_{F}) betrug 2,03 m/min, die Freiraum Austauschrate (FA) wurde auf einen Wert von 30,14 berechnet, somit ergab sich eine Spülzahl (SZ) von 1,828.

Das Absperrorgan wurde als geeignet für den Einsatzfall verifiziert, dies ist durch die ermittelten Kennzahlen bestätigt.

### Beispiel 9 (Fig. 12):

Ein Kugelhahn gemäß Beispiel 8, wobei das Verschlusselement ohne einlaufseitige Vertiefung und ohne Spülbohrungen vorgesehen wurde. Das Verschlusselement (die Kugel) wurde quer zur Strömungsrichtung zylinderförmig auf einen kleineren Durchmesser abgedreht um eine leichtere Durchströmung des Freiraums zu gewährleisten.

Der Kugelhahn wies einen Nenndurchmesser von 63 mm auf, der Gehäuseinnendurchmesser (D_{G}) betrug 102 mm, der Durchmesser des Verschlusselements quer zur Durchgangsrichtung (D_{V}) betrug 72 mm (zylindrisch).

Das durchströmte Freiraumvolumen (F_{ges}) betrug 329 cm³.
Es wurde ein Produktstrom (V_{P}) von 5,74 dm³/min durchgeleitet. Bei einer Nenn-Strömungsgeschwindigkeit (v_{N}) von 1,84 m/min ergab sich dabei ein Druckverlust (p) von ca. 0,5 bar.

Es wurden folgende Kennzahlen ermittelt: ein Spülstromverhältnis (FV) von 100%, die Nenn-Spaltgeschwindigkeit (v_{F}) betrug 1,4 m/min, die Freiraum Austauschrate (FA) wurde auf einen Wert von 17,470 berechnet, somit ergab sich eine Spülzahl (SZ) von 1,904.

Das Absperrorgan wurde als besonders geeignet für den Einsatzfall verifiziert, dies ist durch die ermittelten Kennzahlen bestätigt.

## Patentansprüche

1. Absperrorgan, das ein Ventilgehäuse (1) mit einem Innenraum sowie mindestens einem Einlass (4) und mindestens einem Auslass (5) und ein Verschlusselement (2) aufweist, welches um eine Achse drehbar im Innenraum gelagert ist, wobei zwischen dem Verschlusselement und dem Ventilgehäuse ein Freiraum (9) zum Durchfluss eines Fluids zwischen Ein- und Auslass vorliegt, und an dem mindestens einen Einlass zwischen Ventilgehäuse und Verschlusselement ein Dichtflächenpaar (6, 7) vorgesehen ist, wobei die Dichtfläche (7) des Verschlusselements durch Rotation des Verschlusselements schwenkbar ist und in Sperrposition des Absperrorgans den Einlass durch fluiddichtes Anliegen an der Dichtfläche (6) des Ventilgehäuses versperrt, **dadurch gekennzeichnet, dass** der Abstand der Dichtflächen zur Achse oder zum Mittelpunkt des Verschlusselements größer ist als der Abstand der Achse bzw. des Mittelpunkts zu anderen äußeren Bereichen des Verschlusselements, um den Freiraum zu bilden, der in der Sperrposition mit dem Auslass fluiddurchlässig verbunden ist und/oder
der Abstand der Dichtflächen zur Achse oder zum Mittelpunkt des Verschlusselements kleiner ist als der Abstand der Achse bzw. des Mittelpunkts zu anderen Bereichen des Ventilgehäuseinnenraums, um den Freiraum zu bilden, der in der Sperrposition mit dem Auslass fluiddurchlässig verbunden ist.

2. Absperrorgan nach Anspruch 1, **dadurch gekennzeichnet, dass** das Verschlusselement teilkugelförmig ist und/oder einen kugelsegmentförmigen Absperrteil (8) mit der Dichtfläche aufweist.

3. Absperrorgan nach Anspruch 1 oder 2, **dadurch gekennzeichnet, dass** die Dichtfläche des Gehäuses und/oder des Verschlusselements auf einem Abdichtvorsprung ist und/oder in Ansicht innerhalb der Dichtfläche des Verschlusselements am äußeren Bereich eine Vertiefung (11) vorgesehen ist.

4. Absperrorgan nach einem der Ansprüche 1 bis 3, **dadurch gekennzeichnet, dass** die Dichtfläche des Gehäuses und/oder des Verschlusselements, insbesondere auf einem Abdichtvorsprung, in Ansicht kreisförmig ist.

5. Absperrorgan nach einem der Ansprüche 1 bis 4, **dadurch gekennzeichnet, dass** die Dichtflächen am Einlass ist und der Auslass frei von einem Abdichtelement ist.

6. Absperrorgan nach einem der Ansprüche 1 bis 5, **dadurch gekennzeichnet, dass** der Freiraum durch eine Vertiefung, insbesondere eine durch die Dichtfläche oder den Abdichtvorsprung begrenzte Vertiefung, gebildet wird, wobei das Ventilgehäuse zum Innenraum hin und/oder das Verschlusselement zum Gehäuse hin die Vertiefung aufweist.

7. Absperrorgan nach einem der Ansprüche 1 bis 6, **dadurch gekennzeichnet, dass** der Innenraum teilkugelförmig oder zylindrisch ist.

8. Absperrorgan nach einem der Ansprüche 1 bis 7, **dadurch gekennzeichnet, dass** das Verschlusselement eine Bohrung (10) zum Durchfluss eines Fluids zwischen Ein- und Auslass in Öffnungsposition des Organs aufweist, wobei vorzugsweise weitere Verbindungsbohrungen (12) die Bohrung (10) mit dem Freiraum fluiddurchlässig verbinden.

9. Absperrorgan nach Anspruch 8, wobei die Bohrung (10) vor dem Auslass (5) eine Verengung (13) und/oder ein Strömungswiderstandselement (14), vorzugsweise eine Lochplatte, aufweist.

10. Absperrorgan nach einem der Ansprüche 1 bis 7, **dadurch gekennzeichnet, dass** das Verschlusselement ein massiver Körper ohne Durchflussbohrung normal zur Achse ist.

11. Absperrorgan nach einem der Ansprüche 1 bis 9, **dadurch gekennzeichnet, dass** das Ventilgehäuse und/oder das Verschlusselement aus einem Metall oder einer Metalllegierung besteht, wobei es vorzugsweise eisenhaltig ist.

12. Verwendung eines Absperrorgans nach einem der Ansprüche 1 bis 11 zur Steuerung des Durchflusses eines Fluids, wobei in einer Durchlassposition oder Freiraum-Spülposition des Verschlusselements
● der Differenzdruck zwischen Ein- und Auslass, welcher durch das Absperrorgan gebildet wird, mindestens 0,4 bar;
● das Spülstromverhältnis gebildet durch den Freiraumstrom geteilt durch den Strom durch die Bohrung (10) mindestens 0.1 % ist;
● die Nenn-Spaltgeschwindigkeit gebildet durch den Freiraumstrom geteilt durch Freiraumquerschnitt mindestens 0,1 m/min; und/oder
● die Freiraum-Austauschrate gebildet durch den Freiraumstrom geteilt durch das Freiraumvolumen mindestens 1 1/min;
ist.

13. Verwendung eines Absperrorgans nach einem der Ansprüche 1 bis 12 in einer Leitung beim Transport chemisch instabiler Fluide, wobei vorzugsweise das chemisch instabile Fluid bei Ablagerung im Absperrorgan explosionsgefährdet ist.

14. Verwendung eines Absperrorgans nach Anspruch 12 oder 13, **dadurch gekennzeichnet, dass** das Fluid eine Formmasse, vorzugsweise eine Spinnmasse, ist, und/oder wobei das Fluid eine Cellulose-lösung, vorzugsweise eine Lösung von Cellulose mit einem Aminoxid, insbesondere bevorzugt mit NMMO, ist.

15. Verfahren zur Herstellung von Formkörpern aus einer fluiden Formmasse, umfassend Transportieren einer fluiden Formmasse durch eine Leitung mit einem Absperrorgan nach einem der Ansprüche 1 bis 11 oder unter Verwendung eines Absperrorgans nach einem der Ansprüche 12 bis 14, wobei die Leitung über den Auslass des Absperrorgans zu einer Formungseinheit führt, insbesondere einem Extruder, mit Öffnungen, durch welche die Formmasse gepresst und dadurch geformt wird, und Verfestigen der Formmasse, vorzugsweise durch Erstarrung oder Koagulation.
